(19) Europäisches Patentamt / European Patent Office / Office européen des brevets

(11) **EP 3 567 864 A1**

(12) **EUROPEAN PATENT APPLICATION**

(43) Date of publication:
**13.11.2019 Bulletin 2019/46**

(51) Int Cl.:
***H04N 21/466*** (2011.01)   ***H04L 12/24*** (2006.01)
***H04N 21/482*** (2011.01)

(21) Application number: **19173280.9**

(22) Date of filing: **08.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.05.2018 US 201815974338**

(71) Applicant: **Comcast Cable Communications LLC Philadelphia, Pennsylvania 19103 (US)**

(72) Inventor: **Ture, Ferhan
Washington, DC District of Columbia 20011 (US)**

(74) Representative: **V.O.
P.O. Box 87930
2508 DH Den Haag (NL)**

(54) **USING CONTEXTUAL DATA TO RECOMMEND RELEVANT CONTENT**

(57) Methods and systems for using contextual data (e.g., closed captioning data/information, linear metadata, etc...) to recommend content are described. A historical record of programs (e.g., content segments) accessed by a user on different channels and at different times may be used to generate content access information (e.g., content access/history information associated with a user, viewer information, etc...). The content access information may comprise topics determined from contextual data derived from each of the programs. A correlation between the content access information and each of the topics may be used to recommend content relevant to the user's viewing history.

400

410
DETERMINE VIEWER INFORMATION

420
DETERMINE A PLURALITY OF TOPIC DISTRIBUTIONS

430
DETERMINE A CORRELATION BETWEEN THE VIEWER INFORMATION AND EACH TOPIC DISTRIBUTION OF THE PLURALITY OF TOPIC DISTRIBUTIONS

440
CAUSE AN OUTPUT OF A RECOMMENDATION OF A LINEAR CONTENT ASSET

**FIG. 4**

EP 3 567 864 A1

**Description**

**BACKGROUND**

A person watching television may be unaware of content, such as movies, shows, and more that may be relevant to their television viewing pattern or preferences. Recommending relevant content on television, particularly linear television, to a target customer is challenging. Current systems recommend content to a viewer based on content popularity, for example, what channels and/or programs many viewers watch, what channels and/or programs certain demographics of viewers watch, and based on popular genre or content types. Current systems merely associate channels and/or programs either with a list of users who have watched specific content or with one or more tags/keywords. Current solutions do not take into account what a person normally watches or prefers. These and other shortcomings are addressed by the approaches set forth herein.

**SUMMARY**

It is to be understood that both the following general description and the following detailed description provide examples and explanatory only and are not restrictive. Provided are methods and systems for using contextual data (e.g., closed captioning data/information, linear metadata, etc...) to recommend relevant content. Contextual data may be used to recommend relevant content on television, such as linear television, for example. Content segments, such as content segments associated with linear television, may be used to generate content access information (e.g., content access/history information associated with a user, viewer information, etc...). The content access information may comprise a plurality of weighted topics determined from contextual data associated with each of the plurality of content segments. A plurality of linear content assets (e.g., television channels) associated with a current time window may be used to generate a plurality of topic distributions. Each topic distribution may comprise a plurality of weighted topics determined from contextual data associated with the linear content assets. A correlation between the topics of the content access information and topics associated with each topic distribution may be used to provide a recommendation of a linear content asset (e.g., television channel) to the user.

Additional advantages will be set forth in part in the description which follows or may be learned by practice. The advantages will be realized and attained by means of the elements and combinations particularly pointed out in the appended claims.

**BRIEF DESCRIPTION OF THE DRAWINGS**

The accompanying drawings, which are incorporated in and constitute a part of this specification, provide examples and together with the description, serve to explain the principles of the methods and systems:

Figure 1 is a diagram of an example content delivery network;
Figure 2 is a diagram of content segments associated with a television viewing history;
Figure 3 is a graphical depiction of content access information;
Figure 4 is a flowchart of an example method;
Figure 5 is a flowchart of an example method; and
Figure 6 is a block diagram of an example computing device.

**DETAILED DESCRIPTION**

Before the present methods and systems are described, it is to be understood that the methods and systems are not limited to specific methods, specific components, or to particular implementations. It is also to be understood that the terminology used herein is for the purpose of describing particular examples only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another example includes from the one particular value and/or to the other particular value. Similarly, when values are expressed as approximations, by use of the antecedent "about," it will be understood that the particular value forms another example. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other components, integers or steps. "Such as" is not used in a restrictive sense, but for explanatory purposes.

Described herein are components that may be used to perform the described methods and systems. These and other components are described herein, and it is understood that when combinations, subsets, interactions, groups, etc. of these components are described that while specific reference of each various individual and collective combinations and permutation of these may not be explicitly described, each is specifically contemplated and described herein, for all methods and systems. This applies to all examples of this application including, but not limited to, steps in described methods. Thus, if there are a variety of additional steps that may be performed it is understood that each of these additional steps may be performed with any specific example or combination of examples of the described methods.

The methods and systems described herein may be understood more readily by reference to the following detailed description of examples included therein and to the Figures and their previous and following description.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, methods and systems described herein may take the form of web-implemented computer software. Any suitable computer-readable storage medium may be utilized including hard disks, CD-ROMs, optical storage devices, or magnetic storage devices.

Examples of the methods and systems are described below with reference to block diagrams and flowchart of methods, systems, apparatuses and computer program products. It will be understood that each block of the block diagrams and flowcharts, and combinations of blocks in the block diagrams and flowcharts, respectively, may be implemented by computer program instructions. These computer program instructions may be loaded onto a general purpose computer, special purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that may direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowcharts support combinations of means for performing the specified functions, combinations of steps for performing the specified functions and program instruction means for performing the specified functions. It will also be understood that each block of the block diagrams and flowcharts, and combinations of blocks in the block diagrams and flowcharts, may be implemented by special purpose hardware-based computer systems that perform the specified functions or steps, or combinations of special purpose hardware and computer instructions.

This detailed description may refer to content items (which may also be referred to as "content," "content data," "content information," "content asset," "multimedia asset data file," or simply "data" or "information"). Content items may comprise any information or data that may be licensed to one or more individuals (or other entities, such as business or group). In various examples, content may include electronic representations of video, audio, text and/or graphics, which may include but is not limited to electronic representations of videos, movies, or other multimedia, which may include but is not limited to data files adhering to MPEG2, MPEG, MPEG4 UHD, HDR, 4k, Adobe® Flash® Video (.FLV) format or some other video file format whether such format is presently known or developed in the future. In various examples, the content items described herein may include electronic representations of music, spoken words, or other audio, which may include but is not limited to data files adhering to the MPEG-1 Audio Layer 3 (.MP3) format, Adobe®, CableLabs 1.0,1.1, 3.0, AVC, HEVC, H.264, Nielsen watermarks, V-chip data and Secondary Audio Programs (SAP). Sound Document (.ASND) format or some other format configured to store electronic audio whether such format is presently known or developed in the future. In some cases, content may include data files adhering to the following formats: Portable Document Format (.PDF), Electronic Publication (.EPUB) format created by the International Digital Publishing Forum (IDPF), JPEG (.JPG) format, Portable Network Graphics (.PNG) format, dynamic ad insertion data (.csv), Adobe® Photoshop® (.PSD) format or some other format for electronically storing text, graphics and/or other information whether such format is presently known or developed in the future. In some examples, content items may include any combination of the above-described examples.

This detailed disclosure may refer to consuming content or to the consumption of content, which may also be referred to as "accessing" content, "providing" content, "viewing" content, "listening" to content, "rendering" content, or "playing" content, among other things. In some cases, the particular term utilized may be dependent on the context in which it is used. For example, consuming video may also be referred to as viewing or playing the video. In another example, consuming audio may also be referred to as listening to or playing the audio.

Note that this detailed disclosure may refer to a given entity performing some action. It should be understood that this language may in some cases mean that a system (e.g., a computer) owned and/or controlled by the given entity is actually performing the action.

Described herein is using contextual data (e.g., closed captioning data/information, linear metadata, etc...) to recommend relevant content, such as programs airing on linear television (e.g., on a different channel than that currently being watched). Content access information (e.g., content access/history information associated with a user, viewer information, etc...) may be created and stored that includes a historical record of channels and programs accessed by the user over a period of time. The content access information may comprise a plurality of weighted topics determined from contextual data derived from programs accessed on different channels over the period of time. A plurality of topic distributions, each comprising a plurality of weighted topics derived from contextual data associated with programs airing on different channels, may be generated. The plurality of topic distributions may be generated whenever the user accesses content, such as when the user tunes to a program on linear television, at a current time. A correlation between topics from the content access information and topics associated with each topic distribution of the plurality of topic distributions may be used to a recommend content (e.g., other programs airing on linear television channels at the current time, etc...) to the user that the user may enjoy based on the user's television viewing history.

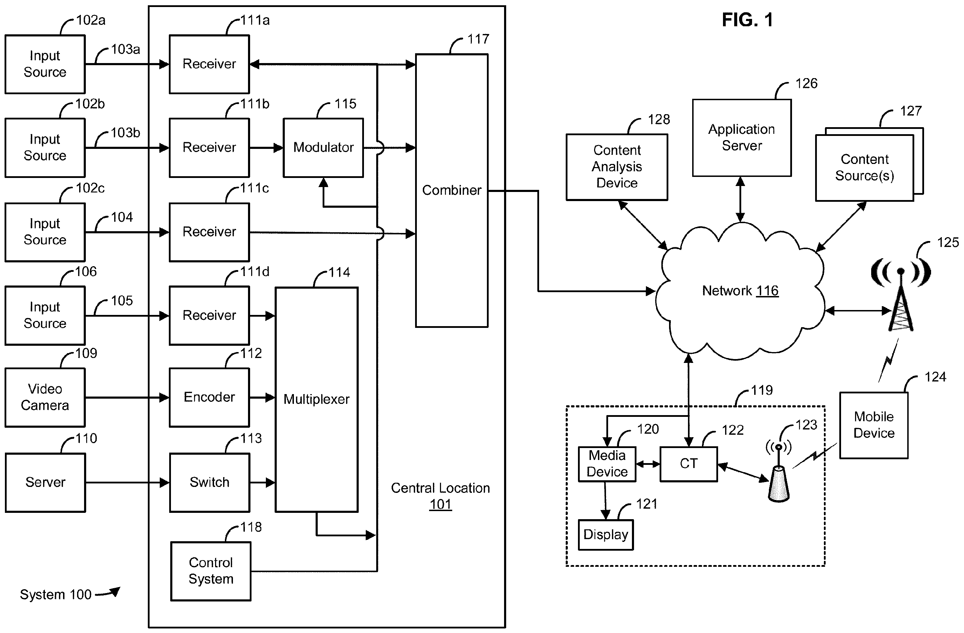

Methods and systems for using contextual data to recommend relevant content to a user, such as a user watching linear television, are described. **FIG. 1** depicts an example system for using contextual data (e.g., closed captioning data/information, linear metadata, etc...) to recommend relevant content to a user. Those skilled in the art will appreciate that present methods may be used in systems that employ both digital and analog equipment. One skilled in the art will appreciate that provided herein is a functional description and that the respective functions may be performed by software, hardware, or a combination of software and hardware.

A system **100** may comprise a central location **101** (e.g., a headend), which may receive content (e.g., data, input programming, and the like) from multiple sources. The central location **101** may combine the content from the various sources and may distribute the content to user (e.g., subscriber) locations (e.g., location **119**) via distribution system **116**.

The central location **101** may receive content from a variety of sources **102a**, **102b**, **102c**. The content may be transmitted from the source to the central location **101** via a variety of transmission paths, including wireless (e.g. satellite paths **103a**, **103b**) and terrestrial path **104**. The central location **101** may also receive content from a direct feed source **106** via a direct line **105**. Other input sources may comprise capture devices such as a video camera **109** or a server **110**. The signals provided by the content sources may include a single content item or a multiplex that includes several content items.

The central location **101** may comprise one or a plurality of receivers **111a**, **111b**, **111c**, **111d** that are each associated with an input source. For example, MPEG encoders such as encoder **112**, are included for encoding local content or a video camera **109** feed. A switch **113** may provide access to server **110**, which may be a Pay-Per-View server, a data server, an internet router, a network system, a phone system, and the like. Some signals may require additional processing, such as signal multiplexing, prior to being modulated. Such multiplexing may be performed by multiplexer (mux) **114**.

The central location **101** may comprise one or a plurality of modulators **115** for interfacing to a network **116**. The modulators **115** may convert the received content into a modulated output signal suitable for transmission over a network **116**. The output signals from the modulators **115** may be combined, using equipment such as a combiner **117**, for input into the network **116**. The network **116** may comprise a content delivery network, a content access network, and/or the like. For example, the network **116** may be configured to provide content from a variety of sources using a variety of network paths, protocols, devices, and/or the like. The content delivery network and/or content access network may be managed (e.g., deployed, serviced) by a content provider, a service provider, and/or the like.

A control system **118** may permit a system operator to control and monitor the functions and performance of the system **100**. The control system **118** may interface, monitor, and/or control a variety of functions, including, but not limited to, the channel lineup for the television system, billing for each user, conditional access for content distributed to users, and the like. The control system **118** may provide input to the modulators for setting operating parameters, such as system specific MPEG table packet organization or conditional access information. The control system **118** may be located at the central location **101** or at a remote location.

The network **116** may distribute signals from the central location **101** to user locations, such as a user location **119**. The network **116** may comprise an optical fiber network, a coaxial cable network, a hybrid fiber-coaxial network, a wireless network, a satellite system, a direct broadcast system, an Ethernet network, a high-definition multimedia interface network, universal serial bus network, or any combination thereof.

A multitude of users may be in communication with the network **116** at one or more of the user locations. At the user location **119**, a media device **120** may demodulate and/or decode, if needed, the signals for display on a display device **121**, such as on a television set (TV) or a computer monitor. For example, the media device **120** may comprise a demodulator, decoder, frequency tuner, and/or the like. The media device **120** may be directly in communication with the network (e.g., for communications via in-band and/or out-of-band signals of a content delivery network) and/or in communication with the network **116** via a communication device **122** (e.g., for communications via a packet switched network). The media device **120** may comprise a set-top box, a digital streaming device, a gaming device, a media storage device, a digital recording device, a combination thereof, and/or the like. The media device **120** may comprise one or more applications, such as content viewers, social media applications, news applications, gaming applications, content stores, electronic program guides, and/or the like. Those skilled in the art will appreciate that the signal may be demodulated and/or decoded in a variety of equipment, including the communication device **122**, a computer, a TV, a monitor, or satellite dish.

The communication device **122** may be located at the user location **119**. The communication device **122** may be configured to communicate with the network **116**. The communications device **122** may comprise a modem (e.g., cable modem), a router, a gateway, a switch, a network device (e.g., optical network unit), and/or the like. The communications device **122** may be configured for communication with the network **116** via a variety of protocols, such as internet protocol, transmission control protocol, file transfer protocol, session initiation protocol, voice over internet protocol, and/or the like. For example, for a cable network, the communication device **122** may be configured to provide network access via a variety of communication protocols and standards, such as Data Over Cable Service Interface Specification.

The user location **119** may comprise a first access point **123**, such as a wireless access point. The first access point **123** may be configured to provide one or more wireless networks in at least a portion of the user location **119**. The first access point **123** may be configured to provide access to the network **116** to devices configured with a compatible wireless radio, such as a mobile device **124**, the media device **120**, the display device **121**, or other computing devices (e.g., laptops, sensor devices, security devices). For example, the first access point **123** may provide a user managed network (e.g., local area network), a service provider managed network (e.g., public network for users of the service provider), and/or the like. It should be noted that in some configurations, some or all of the first access point **123**, the communication device **122**, the media device **120**, and the display device **121** may be implemented as a single device.

The user location **119** may not be fixed. By way of example, a user may receive content from the network **116** on the mobile device **124**. The mobile device **124** may comprise a laptop computer, a tablet device, a computer station, a personal data assistant (PDA), a smart device (e.g., smart phone, smart apparel, smart watch, smart glasses), GPS, a vehicle entertainment system, a portable media player, a combination thereof, and/or the like. The mobile device **124** may communicate with a variety of access points (e.g., at different times and locations or simultaneously if within range of multiple access points). For example, the mobile device **124** may communicate with a second access point **125**. The second access point **125** may be a cell tower, a wireless hotspot, another mobile device, and/or other remote access point. The second access point **125** may be within range of the user location **119** or remote from the user location **119**. For example, the second access point **125** may be located along a travel route, within a business or residence, or other useful locations (e.g., travel stop, city center, park, etc...).

The system **100** may comprise an application server **126**. The application server **126** may be a computing device, such as a server. The application server **126** may provide services related to applications. For example, the application server **126** may comprise an application store. The application store may be configured to allow users to purchase, download, install, upgrade, and/or otherwise manage applications. For example, the application server **126** may be configured to allow users to download applications to a device, such as the mobile device **124**, communications device **122**, the media device **120**, the display device **121**, and/or the like. The application server **126** may run one or more application services to provide data, handle requests, and/or otherwise facilitate operation of applications for the user.

The system **100** may comprise one or more content source(s) **127**. The content source(s) **127** may be configured to provide content (e.g., video, audio, games, applications, data) to the user. The content source(s) **127** may be configured to provide broadcast media, such as digital television, analog television, linear television channels, linear television services, and/or the like. The content source(s) **127** may be configured to provide streaming media, such as on-demand content (e.g., video on-demand), content recordings, and/or the like. For example, the content source(s) **127** may be managed by third party content providers, service providers, television broadcast stations, online content providers, over-the-top content providers, and/or the like. The content may be provided via a content channel (e.g., television station), a subscription, by individual item purchase or rental, and/or the like. The content source(s) **127** may be configured to provide the content via a packet switched network path, such as via an internet protocol (IP) based communication link. The content may be accessed by users via applications, such as mobile applications, television applications, set-top box applications, gaming device applications, and/or the like. An example application may be a custom application (e.g., by content provider, for a specific device), a general content browser (e.g., web browser), an electronic program guide, and/or the like.

The system **100** may comprise a content analysis device **128**. The content analysis device **128** may be configured to provide content, services, and/or the like to the user location **119**. The content analysis device **128** may be one of a plurality of content analysis devices distributed across the network **116**. The content analysis device **128** may be located in a region proximate to the user location **119**. A request for content from the user may be directed to the content analysis device **128** (e.g., due to the location of the content analysis device and/or network conditions). The content analysis device **128** may be configured to package content for delivery to the user (e.g., in a specific format requested by a user device such as the media device **120** or other user device.), provide linear content (e.g., broadcast television, linear television, linear content stream, content received from the one or more content source(s) **127**, etc...), provide (e.g., cause an output of) a content recommendation, combinations thereof, and/or the like. The content recommendation may be presented simultaneously with the linear content. The content recommendation may be presented as an overlay in the linear content. The content recommendation may be presented in a different viewing area than a viewing area for the linear content. The content recommendation may be spliced together with the linear content. The content recommendation may be presented in a predetermined window (e.g., a pop-up screen). The content recommendation may be presented in real-time. The content recommendation may be presented for a predetermined time window (e.g., a time limit after which the content recommendation disappears automatically if not selected, etc...).

The content analysis device **128** may use a history of content consumed/watched by the user to generate content access information. Content access information (e.g., content access/history information associated with a user, viewer information, etc...) may be used to recommend relevant content to the user based on the user's viewing history and/or what the user is consuming at a given time (e.g., what the user is currently watching). Content access information may be a collection of topics determined and weighted based on contextual data (e.g., closed captioning data/information, linear metadata, etc...) associated with a user's television (e.g., linear television, live television, etc...) viewing history. To further associate the content access information with a particular user, the content access information may be saved/stored as viewing profile.

The content analysis device **128** may analyze content (e.g., linear content, broadcast television, linear television, a linear content stream, content received from the one or more content source(s) **127**, etc...) transmitted to and/or otherwise consumed by a user and/or device associated with the user location **119**, such as the media device **120**, the display **121**, the communication device **122**, the mobile device **124**, combinations thereof, and the like, for example. Determining content that has been transmitted to and/or otherwise consumed by a user and/or device associated with the user location **119** may include accessing logs, transmissions, or other data associated with the user and/or device associated with the user location **119** that may identify the content. To generate content access information (e.g., content access/history information associated with a user, viewer information, etc...), the content analysis device **128** may determine content that has been transmitted to and/or otherwise consumed (e.g., currently consumed, previously consumed, etc...) by a user and/or device associated with the user location **119**. For example, the content analysis device **128** may use one or more of program identifiers, channel identifiers, program guide information, channel broadcast information and the like associated with content provided by the one or more content source(s) **127**, and information stored by and/or associated with one or more devices (e.g., the media device **120**, the display **121**, the communication device **122**, the mobile device **124**, etc...) to determine content that has been transmitted to and/or otherwise consumed by the user. The content analysis device **128** may use any means to determine content that has been transmitted to and/or otherwise consumed by the user. The content analysis device **128** may generate content access information based on a request or automatically based on the content that has been transmitted to and/or otherwise consumed (e.g., currently consumed) by a user and/or device associated with the user location **119**. The content access information (e.g., content access/history information associated with a user, viewer information, etc...) may comprise a collection of program/content segment files where, based on contextual data (e.g., closed captioning data/information, linear metadata, etc...) associated with each program/content segment, each program/content segment is associated with a probability distribution of topics.

The content analysis device **128** may generate a content segment file based on contextual data (e.g., closed captioning data/information, linear metadata, etc...) associated with content accessed by and/or otherwise consumed by a user and/or device associated with the user location **119**. For example, at any given moment in time, content such as linear television may be represented as a set of channels (e.g., television channels provided by the one or more content source(s) **127**). Each channel may be associated with a content asset, such as content (e.g., a program/show) that is airing/broadcast at a given time (e.g., during a time window) on the respective channel (e.g., a content asset). The content analysis device **128** may store a viewing history associated with a user. The viewing history may be a history of content (e.g., content segments, content assets, content items, etc...) consumed/watched by a user and the times at which the content was consumed/watched (e.g., a plurality of time windows). The viewing history may be a history going back any length of time such as a day, a week, a year, and the like. There is no limit as to how far back in the user viewing history for which content segment files may be generated (e.g., last $k$ content segments where $k$ represents any quantity, all content segments in the last year, etc...).

The content of each content segment may comprise and/or be associated with topics. The topics may be determined by analyzing/extracting text associated with the contextual data (e.g., closed captioning data/information, linear metadata, etc...) and determining a frequency of certain words and/or phrases. For example, the following text may be derived from closed captions and/or any other contextual data associated with a content segment: "Last night, the Atlanta Falcons decimated the Carolina Panthers in their third football matchup this year. Also, Coach XYZ plans to retire from coaching football this year." Within the text, the term "football" occurs twice. Thus, football may be determined to be a topic associated with the content segment based on the frequency of the term "football." As another example, the topics may be determined by extracting text from the contextual data and processing the text via natural language processing. Additionally, the topics may be determined by analyzing text associated with the contextual data (e.g., closed captioning data/information, linear metadata, etc...) and extracting the topics by any suitable means.

A mixture of topics may apply to the content of each content segment. For example, a news program may include many different topics (e.g., finance related topics, crime related topics, sports related topics, etc...) during a content segment (e.g., program/show) airing/broadcast from 5:10 PM to 5:55 PM. The content analysis device **128** may apply a probability distribution function to each content segment in a user's viewing history to generate a probability distribution of the topics associated with each content segment. For example, content of a program airing/broadcast on a channel (C) at a moment in time ($t$) may be represented as a probability distribution of topics $P$(C, t). Since ($t$) represents a moment in time, ($t_0$) may represent an initial time and ($t-t_0$) may represent a period of time (e.g., a historical time period, duration of time). Thus, a probability distribution of topics derived from contextual data (e.g., closed captioning data/information, linear metadata, etc...) airing/broadcast on a channel at any given moment in time may be represented by the following topics distribution equation:

$$P(\mathrm{C},\ t\text{-}t_0\!:\ t)$$

For example, if a user watched a program on the news television station NBC© from 5:10 PM to 5:55 PM, a probability distribution of topics associated with the contextual data be modeled as P("NBC", 5:10 PM: 5:55 PM). For example, a probability distribution of topics (e.g., a weighted distribution) associated with a program watched on news television station NBC© from 5:10 PM to 5:55 PM (e.g., P("NBC", 5:10 PM: 5:55 PM)) maybe represented by the following table:

| Topics $T_i$ | Probability $P_i$ |
|:---:|:---:|
| Finance | 0.7 |
| Crime | 0.2 |
| Sports | 0.1 |

where there is a 70 percent probability of finance related topics occurring during the content segment, there is a 20 percent probability of crime related topics occurring during the content segment, and there is a 10 percent probability of sports topics occurring during the content segment. A probability distribution of topics derived from contextual data (e.g., closed captioning data/information, linear metadata, etc...) airing/broadcast on a channel at any given moment in time may be represented by any equation/values. A probability distribution of topics associated with a content segment may be stored as a content segment file.

The topics distribution equation may be used to generate content access information (e.g., content access/history information associated with a user, viewer information, etc...) that represents and/or comprises a user's viewing history and/or pattern. The content analysis device **128** may use the topics distribution equation to generate content access information associated with a user by storing each content segment in the user's viewing history as a content segment file. As previously mentioned, each content segment file may be associated with a probability distribution of topics. A user's content viewing history (U($t$)) may be determined based on a function ($f$) that summates (e.g., an average, a weighted average, a low-rank approximation, etc...) any quantity ($k$) of probability distribution of topics associated with any quantity ($k$) of content segment files. Thus, at any given time ($t$) a user's viewing history (U($t$)) may be based on contextual data (e.g., closed captioning data/information, linear metadata, etc...) the user has historically watched/consumed and may be a collection of content segment files represented by the following equation:

$$U(t) = f(P(\mathrm{C}_1,\ t_{s1}\!:\ t_{e1}),\ \ldots,\ P(\mathrm{C}_k,\ t_{sk}\!:\ t_{ek}));$$

where each content segment file ($P$(C, $t_s$: $t_e$)) represents the contextual data (e.g., closed captioning data/information, linear metadata, etc...) of a program on a channel (C) during a time period (e.g., between a starting timestamp $t_s$ and ending timestamp $t_e$). Content access information ($P_{U(t)}$) may comprise a probability distribution of topics derived from a summation (e.g., an average, a weighted average, a low-rank approximation, etc...) of probability distributions of topics associated with a quantity of content segment files. At any given time a user's viewing history may be based on contextual data (e.g., closed captioning data/information, linear metadata, etc...) the user has historically watched/consumed and may be a collection of content segment files may be represented by any equation/value. To further associate content access information (e.g., content access/history information associated with a user, viewer information, etc...) with a particular user, content access information may be saved/stored as viewing profile.

The content analysis device **128**, based on content access information ($P_{U(t)}$), may recommend (e.g., cause an output of a recommendation) content to a user that is relevant to the user's viewing history (U($t$)) and/or current content consumption (e.g., a program/show the user is watching at a given time). In a similar manner as described for generating content segment files, the content analysis device **128** may generate a plurality of topic distributions. A topic distribution ($T$(C($t$))) may be a file comprising a probability distribution of topics derived from contextual data (e.g., closed captioning data/information, linear metadata, etc...) associated with content airing/broadcast on a channel at any given period of time (e.g., between timestamps $t - t_0$.)

The content analysis device **128** may generate a plurality of topic distributions. To recommend content to a user, the content analysis device **128** may generate a plurality of topic distributions based of channels airing/broadcast programs at a given time, such as at a current time that a user is consuming/watching linear television. Thus, each of the plurality of topic distributions (e.g., $T_1$(C($t_1$)), ..., $T_k$(C($t_k$))) may represent a probability distribution of topics derived from contextual data (e.g., closed captioning data/information, linear metadata, etc...) associated with each channel (C) airing/broadcast a program at the given time ($t$) (e.g., the current time that a user is consuming/watching linear television). To recommend content to the user that is relevant to the user's viewing history and/or current content consumption, the content analysis device **128** may determine a relationship between the user's viewing history (U($t$)) and content on each channel (C($t$)) at a given time.

The content analysis device **128** may determine a correlation/relationship (*Rel*) between a user's viewing history (U($t$)) and content on each channel (C($t$)) at a given time based on a divergence function. The content analysis device **128** may use a divergence function/equation to compare the probability distribution of topics associated with each topic distribution of the plurality of topic distributions to the probability distribution of topics associated with the user's content access information (e.g., content access/history information associated with a user, viewer information, viewing profile, etc...). Any divergence function may be used. For example, the content analysis device **128** may use a Kullback-Leiber divergence function to measure a difference between two probability distributions, such as content access information and a topic distribution. a correlation (*Rel*) between a user's viewing history (U($t$)) and content on a channel (C($t$)) at a given time may be represented by any equation/value. For example, a correlation (*Rel*) between a user's viewing history (U($t$)) and content on a channel (C($t$)) at a given time may be represented by the following equation:

$$Rel(C(t), U(t)) = \sum\nolimits_{\text{topic } i} P_{U(t)}\ (i)\log\ \frac{P_{U(t)}\ (i)}{T_{C(t)}\ (i)}$$

The content analysis device 128 may determine, based on a correlation (*Rel*) between a topic distribution ($T$(C($t$)) and content access information ($P_{U(t)}$) satisfying a threshold, a linear content asset (e.g., television channel) associated with the topic distribution to recommend to the user watching/consuming content (e.g., linear television) at a given time. For example, a threshold may be based on a distance between two probability distributions of topics (e.g., the content access information and a topic distribution). The recommended linear content asset may be associated with a topic distribution that satisfies the threshold. For example, the recommended linear content asset may be associated with a topic distribution of a plurality of topic distributions that has a shortest distance (e.g., probability-distance measure, statistical distance) between its probability distribution of topics ($T$(C($t$)) and the probability distribution of topics associated with the content access information ($P_{U(t)}$) compared to other topic distributions of the plurality of topic distributions. For example, the content analysis device **128** may recommend content airing/broadcast on linear television station NBC Sports© to a user watching a linear television station such as NBC© at 7:00 PM because a distribution of topics associated with the content airing/broadcast on NBC Sports® at 7:00 PM satisfies a threshold of relevance based on its associated topics and topics associated with the user's viewing history. A threshold or relevance may be based on any relationship/correlation between content access information (e.g., content access/history information associated with a user, viewer information, etc...) and a topic distribution.

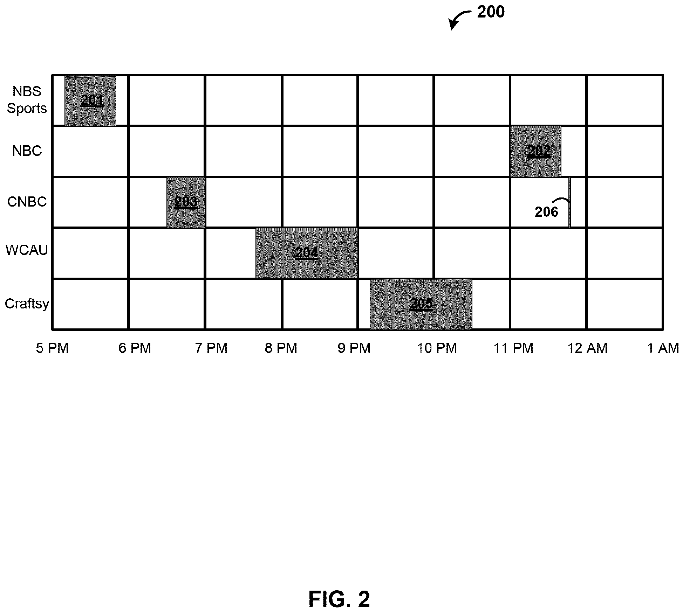

**FIG. 2** is a graphical depiction of content segments associated with a user's content viewing history **200** (e.g., U($t$)). The viewing history **200** may comprise programs (e.g., content segments) watched/consumed on a plurality of linear content assets (e.g., channels) during a plurality of time widows. The viewing history **200** may be a mixture of programs such as news programs on NBC and/or WCAU, educational programs on Craftsy and/or CNBC, and a television series on NBC Sports®. Content segment **201** may represent a program watched/consumed by a user on the NBC Sports® channel during a time window between 5:10 PM and 5:50 PM. Content segment **202** may represent a program watched/consumed by the user on the NBC channel during a time window between 11 PM and 11:40 PM. Content segment **203** may represent a program watched/consumed by the user on the CNBC channel during a time window between 6:30 PM and 7 PM. Content segment **204** may represent a program watched/consumed by the user on the WCAU channel during a time window between 7:40 PM and 9 PM. Content segment **205** may represent a program watched/consumed by the user on the Craftsy channel during a time window between 9:10 PM and 10:30 PM.

Contextual data (e.g., closed captioning data/information, linear metadata, etc...) associated with each content segment of the viewing history **200** may be stored as a content segment file. A probability distribution of topics associated with the contextual data may be represented/modeled as $P(C, t_s: t_e)$ where each content segment ($P(C, t_s: t_e)$) represents the contextual data (e.g., closed captioning data/information, linear metadata, etc...) of a program on a channel (C) during a time period (e.g., between a starting timestamp $t_s$ and ending timestamp $t_e$). The content segment **201** may be represented/modeled as $P$("NBC Sports", 5:10 PM: 5:50 PM). The content segment **202** may be represented/modeled as $P$("NBC", 11 PM: 11:40 PM). The content segment **203** may be represented/modeled as $P$("CNBC", 6:30 PM: 7 PM). The content segment **204** may be represented/modeled as $P$("WCAU", 7:40 PM: 9 PM). The content segment **205** may be represented/modeled as $P$("Craftsy", 9:10 PM: 10:30 PM). As such, the viewing history **200** may be represented/modeled by the following equation:

$$U(t) =$$
$$f\,(P(\text{``NBC Sports''}, 5{:}10\text{ PM}{:} 5{:}50\text{ PM}), P(\text{``NBC''}, 11\text{ PM}{:} 11{:}40\text{ PM}),$$
$$P(\text{``CNBC''}, 6{:}30\text{ PM}{:} 7\text{ PM}), P(\text{``WCAU''}, 7{:}40\text{ PM}{:} 9\text{ PM}), P(\text{``Craftsy''}, 9{:}10$$
$$\text{PM}{:} 10{:}30\text{ PM})).$$

The viewing history **200** may be represented/modeled by any suitable equation/value. Content segment **206** may represent a CNBC channel that the user may have tuned to, but did not actually watched/consumed (e.g., the user changing channels, system interference, noisy signal, etc...). As such, the content segment **206** has a time window with a relatively short duration. The contextual data (e.g., closed captioning data/information, linear metadata, etc...) associated with the content segment **206** may be excluded from content access information (e.g., content access/history information associated with a user, viewer information, etc...) generated based on the user's viewing history **200**. For example, $M$ may represent any quantity and content segments shorter than $M$ minutes may be excluded from content access information, such as content access information (e.g., content access/history information associated with a user, viewer information, etc...) generated by the content analysis device **128** of **FIG. 1**. To further associate content access information with a particular user, content access information may be saved/stored as a viewing profile.

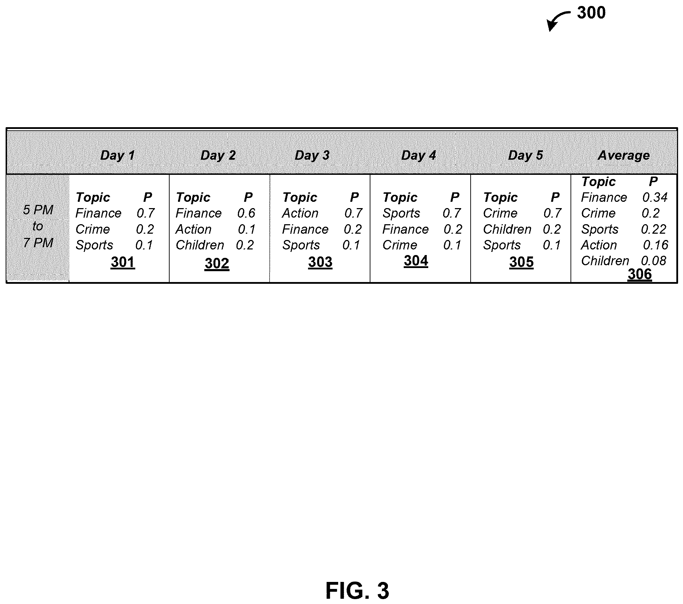

**FIG. 3** is a graphical depiction of content access information (e.g., content access/history information associated with a user, viewer information, etc...) (e.g., $P_{U(t)}$). The content access information **300** may be used to recommend relevant content to a user based on the user's viewing history and/or what the user is consuming at a given time (e.g., what the user is currently watching). The content access information **300** may be a collection of topics determined and weighted based on contextual data (e.g., closed captioning data/information, linear metadata, etc...) associated with the user's television (e.g., linear television, live television, etc...) viewing history.

The content access information **300** may comprise a plurality of content segment files **301-305**. Each content segment file of the plurality of content segment files **301-305** may be associated with content such as a program/show that the user accessed, consumed, and/or watched at different times. As such, each content segment file of the plurality of content segment files **301-305** may be associated with a time window. For example, content segment file **301** is associated with a time window occurring on a Day 1 (e.g., first day of a week, etc...) between 5 PM and 7PM, content segment file **302** is associated with a time window occurring on a Day 2 (e.g., second day of a week, etc...) between 5 PM and 7PM, and so forth. A viewer history (e.g., content access information **300**) may be a collection of files associated with historical dates (and current dates) going back of any length of time such as a day, a week, a year, and the like. A viewer history (e.g., content access information **300**) may be a collection of files associated with historical time windows (and time windows) for any duration of time such as a 30-minute duration, a 1-hour duration, a 2-hour duration, and the like. There is no limit as to how far back in a user's viewing history for which content segment files may be generated and stored and content access information (e.g., content access/history information associated with a user, viewer information, etc...).

Each content segment file of the plurality of content segment files **301-305** may be generated/created (e.g., generated/created by the content analysis device **128**) based on contextual data (e.g., closed captioning data/information, linear metadata, etc...) associated with content such as a program/show that the user accessed, consumed, and/or watched during the respective time window. The content of each content segment file of the plurality of content segment files **301-305** may comprise and/or be associated with topics. The topics may be determined by analyzing/extracting text associated with the contextual data (e.g., closed captioning data/information, linear metadata, etc...) and determining a frequency of certain words and/or phrases, for example. As another example, the topics may be determined by extracting text from the contextual data and processing the text via natural language processing. Additionally, the topics may be determined by analyzing text associated with the contextual data and extracting the topics by any suitable means.

The content of each content segment file of the plurality of content segment files **301-305** may be a mixture of topics. For example, a news program associated with content segment 301 may include many different topics such as finance related topics, crime related topics, and sports related topics. A probability distribution function may be applied to the topics of each content segment file of the plurality of content segment files **301-305** to generate a probability distribution of the topics associated with each content segment. For example, the content segment file **301** may comprise a probability distribution of its related topics where there is a 70 percent probability of finance related topics, there is a 20 percent probability of crime related topics, and there is a 10 percent probability of sports topics.

The content access information **300** may comprise a summation (e.g., an average, a weighted average, a low-rank approximation, etc...) of the probability distribution of topics associated with each content segment file of the plurality of content segment files **301-305**. Content access information (e.g., content access information **300**) may comprise any quantity of probability distribution of topics associated with any quantity of content segment files. The content access information **300** may comprise a probability distribution of topics **306** derived from the summation of the probability distributions of topics associated each content segment file of the plurality of content segment files **301-305**. To further associate content access information with a particular user, the content access information **300** may be saved/stored as a viewing profile.

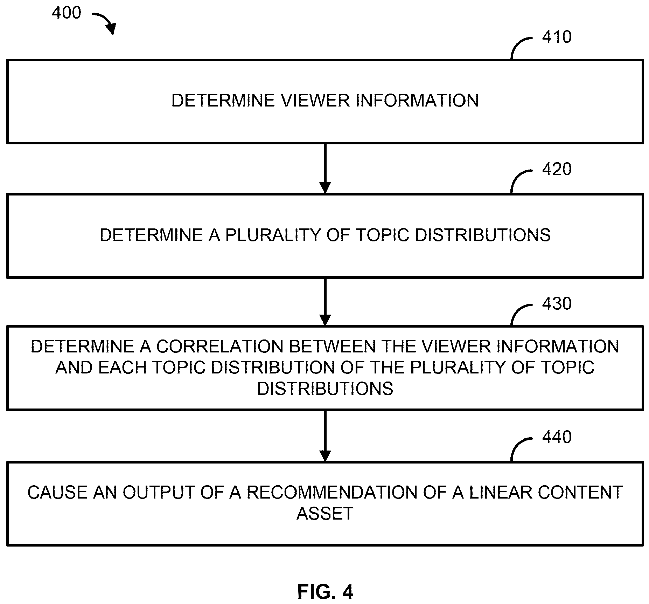

**FIG. 4** is a flowchart of an example method **400**. At **410**, content access information (e.g., content access/history information associated with a user, viewer information, etc...) may be determined and/or generated. The content access information may be determined and/or generated by a device such as a content analysis device (e.g., content analysis device **128**, etc...), for example. The content access information may be used to recommend content relevant to a user based on the user's viewing history and/or what the user is consuming at a given time (e.g., what the user is currently watching). The content access information may be a collection of topics determined and weighted based on contextual data (e.g., closed captioning data/information, linear metadata, etc...) associated with the user's television (e.g., linear television, live television, etc...) viewing history.

The content access information (e.g., content access/history information associated with a user, viewer information, etc...) may be determined and/or generated based on a plurality of content segments, such as content segments associated with linear content assets (e.g., linear television channels) watch/consumed (e.g., accessed) by the user at a plurality of time windows over a period of time (e.g., a user watching television on different channels at different times). Contextual data (e.g., closed captioning data/information, linear metadata, etc...) associated with each content segment of the plurality of content segments may be extracted and/or analyzed. A file and/or a plurality of files comprising contextual data associated with each content segment of the plurality of content segments may be stored (e.g., stored in a database).

The respective contextual data (e.g., closed captioning data/information, linear metadata, etc...) associated with each content segment of the plurality of content segments may be analyzed. The contextual data associated with each content segment of the plurality of content segments may comprise and/or be associated with topics. For example, a content segment may be a news program airing/broadcast from 5:10 PM to 5:55 PM (e.g., a time window) and may include many different topics such as finance related topics, crime related topics, sports related topics, and the like. A plurality of topics may be determined for each time window of the plurality of time windows based on contextual data (e.g., closed captioning data/information, linear metadata, etc...) derived from a respective content segment of the plurality of content segments. The plurality of topics may comprise topics associated with each content segment of the plurality of content segments. The topics associated with each content segment may be determined by analyzing/extracting text associated with the contextual data associated with the respective content segment and determining a frequency of certain words and/or phrases, for example. Additionally, the topics may be determined by extracting text from the contextual data and processing the text via natural language processing. Further, the topics may be determined by analyzing text associated with the contextual data and extracting the topics by any suitable means.

A distribution (e.g., a probability distribution) of a plurality of topics associated with a content segment may be determined for each content segment of the plurality of content segments associated with each respective time window. A distribution of a plurality of topics associated with a content segment may be determined for each content segment of the plurality of content segments based on the plurality of topics derived from the respective content segment. A probability distribution function may be applied to each content segment of the plurality of content segments associated with the in a user's viewing history to generate a probability distribution of the topics associated with each content segment.

The plurality of time windows associated with the plurality of content segments, the plurality of topics associated with each content segment, and the respective distributions of the pluralities of topics associated with each content segment, may be stored as the content access information. The content access information (e.g., content access/history information associated with a user, viewer information, etc...) may comprise a probability distribution of topics derived from a summation (e.g., an average, a weighted average, a low-rank approximation, etc...) of the probability distributions of topics associated with each content segment of the plurality of content segments.

At **420**, a plurality of topic distributions may be determined. For example, the content analysis device may determine the plurality of topic distributions. A topic distribution may be a probability distribution of topics associated with content (e.g., a program/show) available during a time window. The plurality of topic distributions may be determined based on a plurality of linear content assets (e.g., television channels) associated with a current time window (e.g., at a time the user is actively accessing, watching, and/or consuming linear television). For example, if the user is watching linear television at 7 PM, topic distributions may be determined for each linear content asset (e.g., linear television channel) that is airing/broadcast content (e.g., channels on which linear content is available) at 7 PM. A topic distribution may be determined for any quantity of linear content assets (e.g., a plurality of linear content assets). Contextual data (e.g., closed captioning data/information, linear metadata, etc...) associated with each linear content asset that is airing/broadcasting content at a given time may be extracted and/or analyzed. A file and/or a plurality of files comprising contextual data associated with each linear content asset of the plurality of linear content asset may be stored (e.g., stored in a database).

The respective contextual data (e.g., closed captioning data/information, linear metadata, etc...) associated with each linear content asset of the plurality of linear content asset may be analyzed. The contextual data associated with each linear content asset of the plurality of linear content asset may comprise and/or be associated with topics. For example, a linear content asset may be linear television channel airing/broadcasting content at 7 PM (e.g., the current time window) and may include many different topics such as finance related topics, crime related topics, sports related topics, and the like. A plurality of topics may be determined for each linear content asset of the plurality of linear content asset airing/broadcasting content at the current time that the user is watching/consuming linear television based on contextual data derived from a respective linear content asset of the plurality of linear content asset. The topics associated with linear content asset may be determined by analyzing/extracting text associated with the contextual data associated with the respective linear content asset and determining a frequency of certain words and/or phrases, for example. Additionally, the topics may be determined by extracting text from the contextual data and processing the text via natural language processing. Further, the topics may be determined by analyzing text associated with the contextual data and extracting the topics by any suitable means.

A distribution (e.g., a probability distribution) of a plurality of topics associated with a linear content asset may be determined for each linear content asset of the plurality of linear content asset associated with the current time window (e.g., the current time that the user is watching/consuming linear television). A distribution of a plurality of topics associated with a linear content asset may be determined for each linear content asset of the plurality of linear content asset based on the plurality of topics derived from the respective linear content asset. A probability distribution function may be applied to the contextual data (e.g., the plurality of topics derived from the contextual data) associated with each linear content asset of the plurality of linear content assets to generate a topic distribution associated with each linear content asset. For example, a probability distribution function may be applied to each file comprising contextual data (e.g., closed captioning data/information, linear metadata, etc...) associated with each linear content asset. As such, a plurality of topic distributions may be determined. Each topic distribution of the plurality of topic distributions may be stored as a content profile.

At **430**, a correlation between the content access information (e.g., content access/history information associated with a user, viewer information, etc...) and each topic distribution of the plurality of topic distributions may be determined. For example, the content analysis device may determine the correlation between the content access information and each topic distribution of the plurality of topic distributions. The correlation between the content access information and each topic distribution of the plurality of topic distributions may be determined based on a divergence function. A divergence function may be used to compare the probability distribution of topics associated with each topic distribution of the plurality of topic distributions to the probability distribution of topics associated with the content access information (e.g., viewing profile). Any divergence function may be used. For example, a Kullback-Leiber divergence function may be used to determine/measure a distance (e.g., probability-distance measure, statistical distance) between the content access information and each topic distribution of the plurality of topic distributions.

At **440**, a correlation between the content access information (e.g., content access/history information associated with a user, viewer information, etc...) and at least one topic distribution of the plurality of topic distributions satisfying a threshold may cause an output of a recommendation. The content analysis device may cause an output of a recommendation based on the correlation between the content access information and at least one topic distribution of the plurality of topic distributions satisfying the threshold, for example. The content analysis device may send a signal to a device (e.g., the media device **120**, the display device **121**, the communications device **122**, the mobile device **124**, etc...) that causes the device to output a recommendation based on the correlation between the content access information and at least one topic distribution of the plurality of topic distributions satisfying the threshold, for example. The recommendation may suggest a linear content asset (e.g., linear content channel) associated with the topic distribution that satisfies a threshold. The threshold may be based on a distance between the content access information and the topic distribution. For example, the recommended linear content asset may be associated with a topic distribution of a plurality of topic distributions that has a shortest distance (e.g., probability-distance measure, statistical distance) between its probability distribution of topics and the probability distribution of topics associated with the content access information when compared to other topic distributions of the plurality of topic distributions. For example, a device such as the content analysis device **128** may recommend content airing/broadcast on a linear content asset (e.g., linear television station) such as NBC Sports® to a user accessing, consuming, and/or watching a linear content asset such as NBC© at 7:00 PM because a distribution of topics associated with the content airing/broadcast on NBC Sports® at 7:00 PM satisfies a threshold of relevance based on its associated topics (e.g., topic distribution) and topics associated with the user's viewing history (e.g., view information) as determined at 7:00 PM. A threshold or relevance may be based on any relationship/correlation between content access information and a topic distribution. The output of the recommendation may be via a display, such as the display on which the user is currently accessing, consuming, and/or watching linear content. The recommendation may be presented simultaneously with the linear content. The recommendation may be presented as an overlay in the linear content. The recommendation may be presented in a different viewing area than a viewing area for the linear content. The recommendation may be spliced together with the linear content. The recommendation may be presented in a predetermined window (e.g., a pop-up screen). The recommendation may be presented in real-time. The recommendation may be presented for a predetermined time window (e.g., a time limit after which the recommendation disappears automatically if not selected by the user).

Content associated with the recommendation may be accessed by an acceptance of the recommendation. For example, the user may use buttons/arrow keys and/or voice control associated with a control device (e.g., remote control, etc...) and/or a device (e.g., content device, the mobile device **124**, the media device **120**, the display device **121**, the communication device **122**, etc...) to accept the recommendation. Acceptance of the recommendation may cause the device (e.g., content device, the mobile device **124**, the media device **120**, the display device **121**, the communication device **122**, etc...) to automatically tune to the linear asset (e.g., channel) and/or any other content associated with the recommendation. Rejection of the recommendation may cause the recommendation to cease to be presented (e.g., discarded, pop-up removed, etc...)

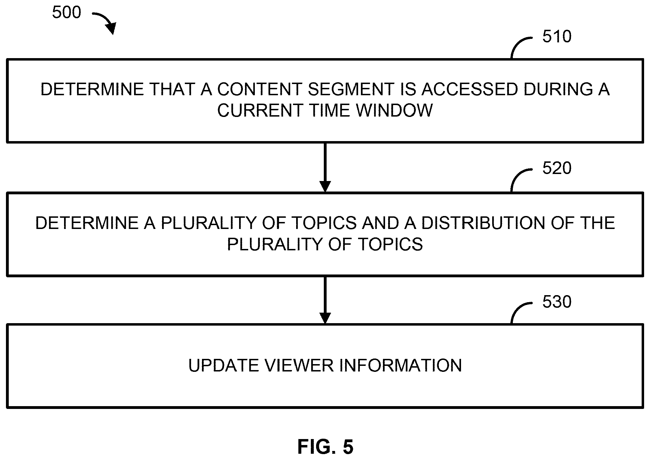

**FIG. 5** is a flowchart of an example method **500**. At **510**, access of a content segment during a current time window may be determined. For example, a device such as a content analysis device (e.g., the content analysis device **128**, etc...) may determine that the content segment is accessed during the current time window. The content segment may be a show/program and/or the like associated with a linear content asset (e.g., linear television channel). For example, the content segment may be a show/program and/or the like airing/broadcast on a television station at a current time, such as airing/broadcast on a linear television channel a user is accessing, consuming and/or watching at a given time. Determining that a content segment is accessed during the current time window may be based on a request for a linear content asset associated with the content segment. For example, the device may determine that the user and/or a device associated with the user (e.g., the mobile device **124**, the media device **120**, the display device **121**, the communication device **122**, etc...) requested the linear content asset from a content source (e.g., the content source(s) **127**).

At **520**, a plurality of topics and a distribution of the plurality of topics may be determined. The plurality of topics and the distribution of the plurality of topics may be determined after determining that the content segment is accessed during the current time window. For example, the content analysis device may determine the plurality of topics and the distribution of the plurality of topics. The plurality of topics and the distribution of the plurality of topics may be determined based on contextual data (e.g., closed captioning data/information, linear metadata, etc...) associated with the content segment. The contextual data associated with the content segment may be extracted and/or analyzed. A file and/or comprising the contextual data may be save/stored (e.g., stored in a database). The contextual data may comprise and/or be associated with topics. For example, the contextual data may include many different topics such as finance related topics, crime related topics, sports related topics, and the like. The plurality of topics may be determined by analyzing/extracting text associated with the contextual data and determining a frequency of certain words and/or phrases, for example. Additionally, the topics may be determined by extracting text from the contextual data and processing the text via natural language processing. Further, the topics may be determined by analyzing text associated with the contextual data and extracting the topics by any suitable means.

The distribution (e.g., a probability distribution) of the plurality of topics may be determined based on the plurality of topics associated with the contextual data (e.g., closed captioning data/information, linear metadata, etc...). A probability distribution function may be applied to the contextual data (e.g., the plurality of topics associated with the contextual data) to generate the distribution of the plurality of topics.

At **530**, the distribution of the plurality of topics may be used to update content access information. For example, the content analysis device may use the distribution of the plurality of topics to update content access information. The content access information may comprise a plurality of time windows. The plurality of time windows may be associated with times that a user accessed, consumed, and/or watched a content segment (e.g., program/show, etc...) associated with a linear content asset (e.g., linear television channel). For example, if a user watched a one-hour news program at 7:00 PM on NBC© on a Tuesday, and a thirty-minute sports program at 5:00 PM on NBC Sports© on a Wednesday, then the plurality of time windows may comprise the time window "7:00 - 8:00 PM on the data associated with Tuesday, and the time window "5:00 - 5:30 PM on the data associated with Wednesday. As such, the plurality of time windows may be associated with a user's viewing history.

Each time window of the plurality of time windows may be associated with contextual data (e.g., linear metadata associated with the respective program/show associated with the time window). The contextual data (e.g., closed captioning data/information, linear metadata, etc...) associated with each time window of the plurality of time windows may be associated with a respective plurality of topics and a respective distribution of the plurality of topics. For each time window, the respective plurality of topics may be determined by analyzing/extracting text associated with the contextual data and determining a frequency of certain words and/or phrases, for example. Additionally, the topics may be determined by extracting text from the contextual data and processing the text via natural language processing. Further, the topics may be determined by analyzing text associated with the contextual data and extracting the topics by any suitable means. For each time window, the respective distribution (e.g., a probability distribution) of the plurality of topics may be determined based on the plurality of topics associated with the contextual data.

A probability distribution function may be applied to the closed captioning data to generate the respective distribution of the plurality of topics. The respective distributions of the pluralities of topics may comprise one or more of an average, a weighted average, a low-rank approximation, or combinations thereof of the respective distribution of the plurality of topics for each time window. Updating the content access information may comprise summating (e.g., averaging) the distribution of the plurality of topics and the respective distributions of the pluralities of topics associated with the content access information and storing the average as a new distribution of a plurality of topics.

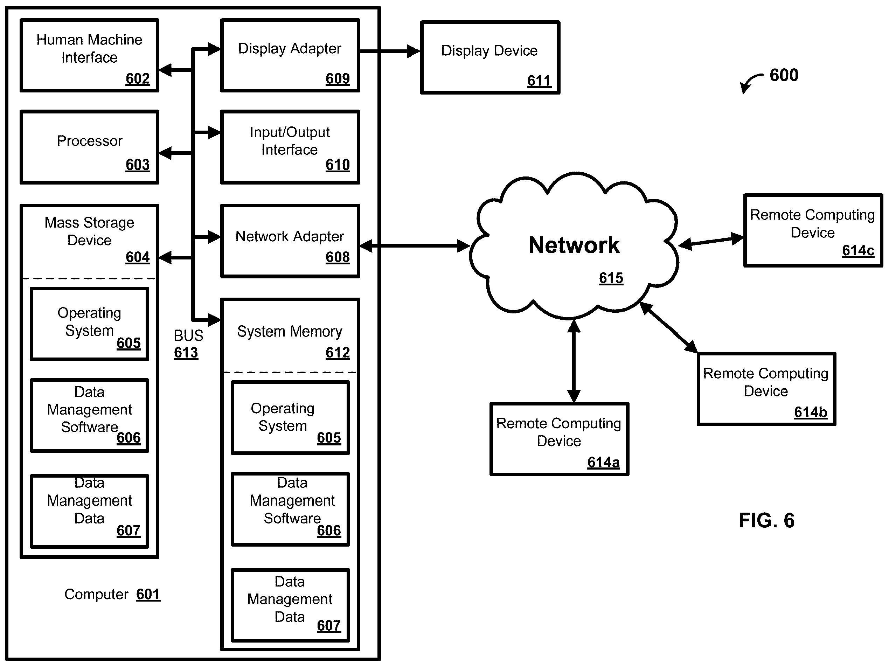

The methods and systems may be implemented on a computer **601** as in **FIG. 6** and described below. By way of example, media device **110**, display **121**, communication device **122**, mobile device **124**, application server **126**, content source(s) **127**, and content analysis device **128** of **FIG. 1** maybe a computer as depicted in **FIG. 6**. Similarly, the methods and systems may utilize one or more computers to perform one or more functions in one or more locations. **FIG. 6** is a block diagram of an operating environment for performing the described methods. This operating environment is only an example of an operating environment and is not intended to suggest any limitation as to the scope of use or functionality of operating environment architecture. Neither should the operating environment be interpreted as having any dependency or requirement relating to any one or combination of components of the example operating environment.

Numerous other general purpose or special purpose computing system environments or configurations may be used. Examples of well-known computing systems, environments, and/or configurations that may be suitable for use with the systems and methods comprise, but are not limited to, personal computers, server computers, laptop devices, and multiprocessor systems. Additional examples comprise set top boxes, programmable consumer electronics, network PCs, minicomputers, mainframe computers, distributed computing environments that comprise any of the above systems or devices, and the like.

The processing of the methods and systems described may be performed by software components. The methods and systems described may be, in the general context, computer-executable instructions, such as program modules, being executed by one or more computers or other devices. Generally, program modules comprise computer code, routines, programs, objects, components, data structures, etc. that perform particular tasks or implement particular abstract data types. The described methods may also be practiced in grid-based and distributed computing environments where tasks are performed by remote processing devices that are linked through a communications network. In a distributed computing environment, program modules may be located in both local and remote computer storage media including memory storage devices.

Further, one skilled in the art will appreciate that the systems and methods described may be implemented via a general-purpose computing device in the form of a computer **601**. The components of the computer **601** may comprise, but are not limited to, one or more processors **603**, a system memory **612**, and a system bus **613** that couples various system components including the one or more processors **603** to the system memory **612**. The system may utilize parallel computing.

The system bus **613** represents one or more of several possible types of bus structures, including a memory bus or memory controller, a peripheral bus, an accelerated graphics port, or local bus using any of a variety of bus architectures. By way of example, such architectures may comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus **613**, and all buses specified in this description may also be implemented over a wired or wireless network connection and each of the subsystems, including the one or more processors **603**, a mass storage device **604**, an operating system **605**, content recommendation software **606**, content access information (e.g., content access/history information associated with a user, viewer information, etc...) and topic distribution data **607**, a network adapter **608**, the system memory **612**, an Input/Output Interface **610**, a display adapter **609**, a display device **611**, and a human machine interface **602**, may be contained within one or more remote computing devices **614a,b,c** at physically separate locations, connected through buses of this form, in effect implementing a fully distributed system.

The computer **601** typically comprises a variety of computer readable media. Readable media may be any available media that is accessible by the computer **601** and comprises, for example and not meant to be limiting, both volatile and non-volatile media, removable and non-removable media. The system memory **612** comprises computer readable media in the form of volatile memory, such as random access memory (RAM), and/or non-volatile memory, such as read only memory (ROM). The system memory **612** typically contains data such as the content access information (e.g., content access/history information associated with a user, viewer information, etc...) and topic distribution data **607** and/or program modules such as the operating system **605** and the content recommendation software **606** that are immediately accessible to and/or are presently operated on by the one or more processors **603**.

The computer **601** may also comprise other removable/non-removable, volatile/non-volatile computer storage media. By way of example, **FIG. 6** depicts the mass storage device **604** which may provide non-volatile storage of computer code, computer readable instructions, data structures, program modules, and other data for the computer **601**. For example and not meant to be limiting, the mass storage device **604** may be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any quantity of program modules may be stored on the mass storage device **604**, including by way of example, the operating system **605** and the content recommendation software **606**. Each of the operating system **605** and the content recommendation software **606** (or some combination thereof) may comprise elements of the programming and the content recommendation software **606**. The content access information and topic distribution data **607** may also be stored on the mass storage device **604**. The content access information and topic distribution data **607** may be stored in any of one or more databases known in the art. Examples of such databases comprise, DB2®, Microsoft® Access, Microsoft® SQL Server, Oracle®, MySQL, PostgreSQL, and the like. The databases may be centralized or distributed across multiple systems.

The user may enter commands and information into the computer **601** via an input device (not shown). Examples of such input devices comprise, but are not limited to, a keyboard, pointing device (*e.g.*, a "mouse"), a microphone, a joystick, a scanner, tactile input devices such as gloves, and other body coverings, and the like These and other input devices may be in communication with the one or more processors **603** via the human machine interface **602** that is coupled to the system bus **613**, but may be also in communication with other interface and bus structures, such as a parallel port, game port, an IEEE 1394 Port (also known as a Firewire port), a serial port, or a universal serial bus (USB).

The display device **611** may also be in communication with the system bus **613** via an interface, such as the display adapter **609**. It is contemplated that the computer **601** may have more than one display adapter **609** and the computer **601** may have more than one display device **611**. For example, the display device **611** may be a monitor, an LCD (Liquid Crystal Display), or a projector. In addition to the display device **611**, other output peripheral devices may comprise components such as speakers (not shown) and a printer (not shown) which may be in communication with the computer **601** via the Input/Output Interface **610**. Any step and/or result of the methods may be output in any form to an output device. Such output may be any form of visual representation, including, but not limited to, textual, graphical, animation, audio, tactile, and the like. The display device **611** and computer **601** may be part of one device, or separate devices.

The computer **601** may operate in a networked environment using logical connections to one or more remote computing devices **614a,b,c**. By way of example, a remote computing device may be a personal computer, portable computer, smartphone, a server, a router, a network computer, a peer device or other common network node, and so on. Logical connections between the computer **601** and a remote computing device **614a,b,c** may be made via a network **615**, such as a local area network (LAN) and/or a general wide area network (WAN). Such network connections may be through the network adapter **608**. The network adapter **608** may be implemented in both wired and wireless environments. Such networking environments are conventional and commonplace in dwellings, offices, enterprise-wide computer networks, intranets, and the Internet.

For purposes of example, application programs and other executable program components such as the operating system **605** are shown herein as discrete blocks, although it is recognized that such programs and components reside at various times in different storage components of the computing device **601**, and are executed by the one or more processors **603** of the computer. An implementation of the content recommendation software **606** may be stored on or transmitted across some form of computer readable media. Any of the described methods may be performed by computer readable instructions embodied on computer readable media. Computer readable media may be any available media that may be accessed by a computer. By way of example and not meant to be limiting, computer readable media may comprise "computer storage media" and "communications media." "Computer storage media" comprise volatile and non-volatile, removable and non-removable media implemented in any methods or technology for storage of information such as computer readable instructions, data structures, program modules, or other data. For example, computer storage media may comprise, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by a computer.

The methods and systems may employ Artificial Intelligence techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

The description and examples herein provide those of ordinary skill in the art with a complete disclosure and description of how the compounds, compositions, articles, devices and/or methods claimed herein are made and evaluated, and are intended to be purely examples and are not intended to limit the scope of the methods and systems. Efforts have been made to ensure accuracy with respect to numbers (e.g., amounts, temperature, etc...), but some errors and deviations should be accounted for.

While the methods and systems have been described in connection with specific examples, it is not intended that the scope be limited to the particular examples set forth, as the examples herein are intended in all respects to be example rather than restrictive.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; the number or type of examples described in the specification.

Here follows a list of numbered clauses highlighting various aspects:

Clause 1: A method comprising: determining, for each of one or more content segments of a plurality of content segments accessed at a plurality of time windows, based on contextual data derived from a respective content segment, a plurality of topics and a distribution of the plurality of topics storing the plurality of time windows, the respective pluralities of topics, and the respective distributions of the pluralities of topics, as content access information; determining, for each of a plurality of the linear content assets associated with a current time window, based on contextual data derived from a respective linear content asset, a plurality of topics and a distribution of the plurality of topics; storing, for each of the plurality of the linear content assets, the respective plurality of topics and the respective distribution of the plurality of topics, as a topic distribution; and causing, based on a correlation between the content access information and a topic distribution satisfying a threshold, output of a recommendation of the respective linear content asset.

Clause 2: The method of clause 1, wherein the threshold is based on a probability divergence associated with the content access information and the topic distribution for the respective linear content asset.

Clause 3: The method of any of the preceding clauses, wherein the respective distributions of the pluralities of topics comprises one or more of an average, a weighted average, a low-rank approximation, or combinations thereof of the distribution of the plurality of topics for each time window of the plurality of time windows.

Clause 4: The method of any of the preceding clauses, wherein the correlation between the content access information and the respective topic distributions is based on a distance between the distribution of the plurality of topics of the content access information and a distribution of the pluralities of topics of the topic distribution.

Clause 5: The method of any of the preceding clauses, wherein determining the plurality of topics comprises: extracting text from the contextual data derived from the respective content segment; and processing the text via natural language processing.

Clause 6: The method of any of the preceding clauses, wherein determining, for each of the plurality of the linear content assets, the plurality of topics comprises: extracting text from the contextual data derived from the respective linear content asset; and processing the text via natural language processing.

Clause 7: A method performed separately or in combination with any of the preceding clauses, the method comprising: determining, based on contextual data associated with a plurality of content segments accessed at a plurality of time windows, content access information; determining, based on a plurality of linear content assets associated with a current time window, a plurality of topic distributions; determining a correlation between the content access information and each topic distribution of the plurality of topic distributions; and causing, based on a correlation between the content access information and a topic distribution of the plurality of topic distributions satisfying a threshold, output of a recommendation of a linear content asset associated with the topic distribution that satisfied the threshold.

Clause 8: The method of any of the preceding clauses, wherein determining the content access information comprises determining, for each of one or more content segments of the plurality of content segments accessed at the plurality of time windows, based on contextual data derived from a respective content segment, a plurality of topics and a distribution of the plurality of topics.

Clause 9: The method of any of the preceding clauses, wherein determining the plurality of topics comprises: extracting text from the contextual data; and processing the text via natural language processing.

Clause 10: The method of any of the preceding clauses, wherein determining the distribution of the plurality of topics comprises: determining a distribution of topics for each for each of the one or more content segments; and determining an average distribution of the distributions of topics.

Clause 11: The method of any of the preceding clauses, wherein determining the plurality of topic distributions comprises: determining, for each of the plurality of the linear content assets associated with the current time window, based on contextual data derived from a respective linear content asset, a plurality of topics and a distribution of the plurality of topics; and storing, for each of the plurality of the linear content assets, the respective plurality of topics and the respective distribution of the plurality of topics, as a topic distribution.

Clause 12: The method of any of the preceding clauses, wherein determining the plurality of topics comprises: extracting text from the contextual data; and processing the text via natural language processing.

Clause 13: The method of any of the preceding clauses, wherein determining the correlation between the content access information and each topic distribution of the plurality of topic distributions comprises determining a distance between the distribution of the plurality of topics of the content access information and the respective distributions of the pluralities of topics of the topic distributions.

Clause 14: The method of any of the preceding clauses, wherein the threshold is based on a probability divergence associated with the content access information and the topic distribution.

Clause 15: A method performed separately or in combination with any of the preceding clauses, the method comprising: determining that a content segment is accessed during a current time window; after determining that the content segment is accessed during the current time window, determining, based on contextual data associated with the content segment, a plurality of topics and a distribution of the plurality of topics; and updating, based the distribution of the plurality of topics, content access information, wherein the content access information comprises a plurality of time windows, and for each time window of the plurality of time windows, based on contextual data derived from a content segment accessed during the respective time window, a respective plurality of topics and a respective distribution of the plurality of topics.

Clause 16: The method of any of the preceding clauses, wherein updating the content access information comprises: averaging the distribution of the plurality of topics and the respective distributions of the pluralities of topics; and storing the average as a new distribution of a plurality of topics.

Clause 17: The method of any of the preceding clauses, wherein the respective distributions of the pluralities of topics comprises one or more of an average, a weighted average, a low-rank approximation, or combinations thereof of the respective distribution of the plurality of topics for each time window.

Clause 18: The method of any of the preceding clauses, wherein the content segment is associated with a linear content asset.

Clause 19: The method of any of the preceding clauses, wherein determining the plurality of topics comprises: extracting text from the contextual data derived from the content segment; and processing the text via natural language processing.

Clause 20: The method of any of the preceding clauses, wherein the determination that the content segment is accessed during the current time window is based on a request for a linear content asset associated with the content segment.

It will be apparent to those skilled in the art that various modifications and variations may be made without departing from the scope. Other examples will be apparent to those skilled in the art from consideration of the specification and practice instanced herein. It is intended that the specification and examples be considered as example only, with a true scope being indicated by the following claims.

**Claims**

1. A method comprising:

    determining, for each of one or more content segments of a plurality of content segments accessed at a plurality of time windows, based on contextual data derived from a respective content segment, a plurality of topics and a distribution of the plurality of topics;

storing the plurality of time windows, the respective pluralities of topics, and the respective distributions of the pluralities of topics, as content access information;

determining, for each of a plurality of the linear content assets associated with a current time window, based on contextual data derived from a respective linear content asset, a plurality of topics and a distribution of the plurality of topics;

storing, for each of the plurality of the linear content assets, the respective plurality of topics and the respective distribution of the plurality of topics, as a topic distribution; and

causing, based on a correlation between the content access information and a topic distribution satisfying a threshold, output of a recommendation of the respective linear content asset.

2. The method of claim 1, wherein the threshold is based on a probability divergence associated with the content access information and the topic distribution for the respective linear content asset.

3. The method of any of the preceding claims, wherein the respective distributions of the pluralities of topics comprises one or more of an average, a weighted average, a low-rank approximation, or combinations thereof of the distribution of the plurality of topics for each time window of the plurality of time windows.

4. The method of any of the preceding claims, wherein the correlation between the content access information and the respective topic distributions is based on a distance between the distribution of the plurality of topics of the content access information and a distribution of the pluralities of topics of the topic distribution.

5. The method of any of the preceding claims, wherein determining the plurality of topics comprises:

extracting text from the contextual data derived from the respective content segment; and
processing the text via natural language processing.

6. The method of any of the preceding claims, wherein determining, for each of the plurality of the linear content assets, the plurality of topics comprises:

extracting text from the contextual data derived from the respective linear content asset; and
processing the text via natural language processing.

7. The method of any of the preceding claims, further comprising:

determining that a content segment is accessed during the current time window;
after determining that the content segment is accessed during the current time window, determining, based on contextual data associated with the content segment, a plurality of topics and a distribution of the plurality of topics for the content segment; and
updating, based on the distribution of the plurality of topics for the content segment, the content access information.

8. The method of claim 7, wherein updating the content access information comprises:

averaging the distribution of the plurality of topics for the content segment and the respective distributions of the pluralities of topics; and
storing the average as a new distribution of a plurality of topics.

9. The method of claim 7, wherein the content segment is associated with a linear content asset.

10. The method of claim 7, wherein the determination that the content segment is accessed during the current time window is based on a request for a linear content asset associated with the content segment.

11. The method of any of the preceding claims, further comprising receiving an acceptance of the recommendation.

12. The method of claim 11, further comprising causing, based on the acceptance of the recommendation, a media device to tune to the respective linear content asset.

**13.** An apparatus comprising:

one or more processors; and
a memory storing processor executable instructions that, when executed by the one or more processors, cause the apparatus to perform the methods of any of claims 1-12.

**14.** A computer-readable medium storing processor executable instructions that, when executed by one or more processors, cause the one or more processors to perform the methods of any of claims 1-12.

**15.** A system comprising at least one computing device configured to perform the methods of any of claims 1-12.

**FIG. 1**

EP 3 567 864 A1

200

| | 5 PM | 6 PM | 7 PM | 8 PM | 9 PM | 10 PM | 11 PM | 12 AM | 1 AM |
|---|---|---|---|---|---|---|---|---|---|
| NBS Sports | 201 | | | | | | | | |
| NBC | | | | | | | 202 | | |
| CNBC | | 203 | | | | | 206 | | |
| WCAU | | | | 204 | | | | | |
| Craftsy | | | | | 205 | | | | |

## FIG. 2

300

| | Day 1 | | Day 2 | | Day 3 | | Day 4 | | Day 5 | | Average | |
|---|---|---|---|---|---|---|---|---|---|---|---|---|
| | *Topic* | *P* | *Topic* | *P* | *Topic* | *P* | *Topic* | *P* | *Topic* | *P* | *Topic* | *P* |
| *5 PM to 7 PM* | Finance | 0.7 | Finance | 0.6 | Action | 0.7 | Sports | 0.7 | Crime | 0.7 | Finance | 0.34 |
| | Crime | 0.2 | Action | 0.1 | Finance | 0.2 | Finance | 0.2 | Children | 0.2 | Crime | 0.2 |
| | Sports | 0.1 | Children | 0.2 | Sports | 0.1 | Crime | 0.1 | Sports | 0.1 | Sports | 0.22 |
| | | | | | | | | | | | Action | 0.16 |
| | **301** | | **302** | | **303** | | **304** | | **305** | | Children | 0.08 |
| | | | | | | | | | | | **306** | |

# FIG. 3

400

410

DETERMINE VIEWER INFORMATION

420

DETERMINE A PLURALITY OF TOPIC DISTRIBUTIONS

430

DETERMINE A CORRELATION BETWEEN THE VIEWER INFORMATION AND EACH TOPIC DISTRIBUTION OF THE PLURALITY OF TOPIC DISTRIBUTIONS

440

CAUSE AN OUTPUT OF A RECOMMENDATION OF A LINEAR CONTENT ASSET

**FIG. 4**

500

510

```
DETERMINE THAT A CONTENT SEGMENT IS ACCESSED DURING A
CURRENT TIME WINDOW
```

520

```
DETERMINE A PLURALITY OF TOPICS AND A DISTRIBUTION OF THE
PLURALITY OF TOPICS
```

530

```
UPDATE VIEWER INFORMATION
```

FIG. 5

FIG. 6

Europäisches
Patentamt

European
Patent Office

Office européen
des brevets

## EUROPEAN SEARCH REPORT

Application Number

EP 19 17 3280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2018/080532 A1 (ROVI GUIDES INC [US]) 3 May 2018 (2018-05-03) * paragraphs [0040], [0041], [0064], [0079], [0120], [0121], [0140] * * figures 1, 2 * ----- | 1-15 | INV. H04N21/466 H04L12/24 H04N21/482 |
| Y | US 2018/095980 A1 (DE FRANCISCI MORALES GIANMARCO [ES] ET AL) 5 April 2018 (2018-04-05) * paragraph [0075] - paragraph [0082] * * paragraph [0084] * ----- | 1-15 | |
| A | US 2012/233191 A1 (RAMANUJAM SRIVATSAN [US]) 13 September 2012 (2012-09-13) * paragraphs [0046] - [0047] * ----- | 1-15 | |
| A | US 2016/073166 A1 (HU SI YING DIANA [US] ET AL) 10 March 2016 (2016-03-10) * figures 1-18 * ----- | 1-15 | |
| A | US 2015/370818 A1 (DES JARDINS GEORGE THOMAS [US] ET AL) 24 December 2015 (2015-12-24) * figures 1-5 * ----- | 1-15 | TECHNICAL FIELDS SEARCHED (IPC)  H04N H04L |

The present search report has been drawn up for all claims

| Place of search | Date of completion of the search | Examiner |
|---|---|---|
| The Hague | 9 August 2019 | Votini, Stefano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 17 3280

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2019

| Patent document cited in search report | | Publication date | Patent family member(s) | | Publication date |
|---|---|---|---|---|---|
| WO 2018080532 | A1 | 03-05-2018 | AU | 2016428215 A1 | 16-05-2019 |
| | | | CA | 3004281 A1 | 03-05-2018 |
| | | | EP | 3533022 A1 | 04-09-2019 |
| | | | WO | 2018080532 A1 | 03-05-2018 |
| US 2018095980 | A1 | 05-04-2018 | US | 2014337308 A1 | 13-11-2014 |
| | | | US | 2018095980 A1 | 05-04-2018 |
| US 2012233191 | A1 | 13-09-2012 | NONE | | |
| US 2016073166 | A1 | 10-03-2016 | NONE | | |
| US 2015370818 | A1 | 24-12-2015 | NONE | | |

EPO FORM P0459

For more details about this annex : see Official Journal of the European Patent Office, No. 12/82